# FASCICULE DE BREVET EUROPEEN

(11) **EP 1 950 825 B1**
(45) Date de publication et mention de la délivrance du brevet: **27.04.2011**
(21) Numéro de dépôt: 07024870.3
(22) Date de dépôt: 21.12.2007
(51) Int. Cl.: H01M 8/02

(54) **Plaque de distribution métal-graphite souple pour une pile à combustible**
Flexible Metall-Graphit-Verteilerplatte für eine Brennstoffzelle
Flexible metal-graphite distribution plate for a fuel cell

(30) Priorité: 09.01.2007 FR 0700183
(43) Date de publication de la demande: 30.07.2008
(73) Titulaire: Société de Technologie Michelin, 63000 Clermont-Ferrand (FR); Michelin Recherche et Technique S.A., 1763 Granges-Paccot (CH)
(72) Inventeur: Delfino, Antonio, 1772 Grolley (CH); Olsommer, David, 1801 Le Mont Pellerin (CH); Büchi, Felix, 4900 Langenthal (CH)
(74) Mandataire: Bauvir, Jacques

(56) Documents cités:
- EP-A- 1 154 504
- EP-A- 1 615 281
- FR-A- 2 810 795
- JP-A- 2000 133 282
- US-A- 5 300 370
- US-A1- 2005 221 158
- US-B1- 6 864 007

## Description

### DOMAINE DE L'INVENTION

La présente invention concerne les piles à combustible à membrane polymère échangeuse d'ions. Plus particulièrement, elle concerne les plaques de distribution de fluides utilisées dans de telles piles à combustible, c'est à dire les plaques bipolaires installées entre chacune des cellules électrochimiques élémentaires et les plaques d'extrémité installées de part et d'autre de l'empilage des différentes cellules électrochimiques.

### ETAT DE LA TECHNIQUE

Les plaques bipolaires utilisées dans les piles à combustible remplissent deux fonctions très différentes. On sait qu'il faut alimenter la pile en gaz carburant et en gaz comburant, c'est-à-dire en hydrogène et en air ou en oxygène pur, et qu'il faut également la refroidir, c'est-à-dire la faire traverser par un fluide de refroidissement comme de l'eau. L'une des fonctions des plaques bipolaires est de permettre l'acheminement de ces différents fluides nécessaires au fonctionnement de la pile à combustible. Par ailleurs, les plaques bipolaires remplissent également une fonction électrique : assurer la conduction électrique entre l'anode et la cathode de chacune des cellules électrochimiques adjacentes. En effet, une pile à combustible est toujours constituée par l'assemblage en série d'un grand nombre de cellules électrochimiques élémentaires ; les cellules électrochimiques élémentaires étant connectées en série, la tension nominale de la pile à combustible est la somme des tensions de chaque cellule électrochimique élémentaire.

Ces différentes fonctions, acheminer les fluides et conduire l'électricité, donnent le cahier des charges auquel doivent satisfaire les matériaux utilisés pour la réalisation de ces plaques bipolaires. Les matériaux utilisés doivent présenter une très grande conductibilité électrique. Les matériaux utilisés doivent aussi être étanches aux fluides utilisés et faire preuve d'une très grande stabilité chimique vis-à-vis de ces fluides.

En outre, les plaques bipolaires doivent présenter les caractéristiques mécaniques suffisantes pour permettre la juxtaposition d'un grand nombre de cellules électrochimiques élémentaires et plaques bipolaires associées et le maintien de l'ensemble par compression entre des plaques d'extrémité grâce à des tirants. Les plaques bipolaires doivent présenter des caractéristiques mécaniques suffisantes pour supporter cette compression. Le graphite est couramment utilisé car ce matériau offre tout à la fois une grande conductibilité électrique et est chimiquement inerte aux fluides utilisés. La demande de brevet WO 2005/006472 montre une réalisation possible de telles plaques bipolaires. On voit qu'elles sont constituées par la superposition de deux plaques en graphite relativement rigides avec interposition d'une feuille réalisée en matière graphite assez souple afin de s'accommoder des tolérances d'épaisseur des différentes couches. Les plaques en graphite comportent les réseaux de canaux nécessaires à la distribution des gaz carburant et comburant, c'est-à-dire en hydrogène et en air ou en oxygène pur, et le canal permettant de faire traverser chaque plaque bipolaire par un fluide de refroidissement comme de l'eau.

Malheureusement, les éléments rigides participant à la constitution des plaques bipolaires en graphite sont assez fragiles aux chocs, en particulier pendant les manipulations lors de l'assemblage de la pile. La couche réalisée en matériau graphite souple, dont il a été fait état précédemment, est en outre tout particulièrement difficile à manipuler de façon industrielle. Tout ceci obère de façon importante les coûts de fabrication de telles plaques bipolaires.

Le brevet US 6,379,476 propose de réaliser des plaques bipolaires en acier inoxydable revêtu d'un film passive en surface et ayant des inclusions en carbure faisant protubérance à la surface. Selon le déposant de ce brevet, le produit proposé devrait présenter une résistance électrique de contact suffisamment basse pour en faire des plaques bipolaires. Cependant, si cette solution peut présenter quelques avantages par rapport aux plaques bipolaires entièrement réalisées en graphite, notamment quant aux propriétés mécaniques, elle reste complexe à mettre en oeuvre et la résistivité électrique peut s'avérer trop importante surtout si l'on vise à atteindre une très grande densité de puissance pour la pile à combustible.

On peut encore citer la demande de brevet EP 1154504 qui propose aussi de réaliser des plaques bipolaires avec un canal de refroidissement dont les parois sont métalliques, les parois en contact avec les membranes - électrodes étant non métalliques.

La demande de brevet US2005/0221158 décrit une plaque bipolaire composite formée d'un support en acier comportant un revêtement conducteur et anticorrosion, les canaux étant formée dans une couche en graphite percée de part en part pour définir les canaux. Cette solution présente donc les mêmes défauts que ceux cités dans le commentaire de la demande de brevet WO 2005/006472.

D'autres demandes de brevet proposent de réaliser des plaques bipolaires en matériau non métallique, par exemple en matière plastique, en raison de la très grande insensibilité de beaucoup de ces matières aux agressions chimiques dues aux gaz utilisés ainsi qu'au fluide de refroidissement. On citera par exemple la demande de brevet WO 2006/100029.

L'utilisation de plaques métalliques comme plaques bipolaires offre plusieurs avantages sur les plaques en graphite. Le principal avantage à citer est la résistance mécanique supérieure du métal qui permet de réduire les épaisseurs des plaques, et d'éviter les problèmes de fissures de plaques. Le métal associé à un traitement de surface particulier est une bonne solution pour le côté cathode (réactions chimiques de réduction). Sa tenue à la corrosion et sa conductibilité sont bonnes. En revanche, du côté anode (réactions chimiques d'oxydations), même avec un bon traitement de surface, il apparaît de la corrosion après quelques centaines d'heures de fonctionnement seulement.

L'objectif de la présente invention est de proposer un agencement pour plaque de distribution de gaz pour une cellule électrochimique de pile à combustible qui évite les inconvénients cités ci-dessus tout en étant aussi robuste que possible et assez facile à fabriquer.

### BREVE DESCRIPTION DE L'INVENTION

L'invention propose une plaque de distribution de fluide pour une pile à combustible, comportant une première plaque en matériau étanche à tous les fluides utilisés dans une pile à combustible et conducteur de l'électricité, ladite plaque de distribution présentant une section utile qui est la surface sur laquelle les gaz utilisés par la réaction électrochimique sont répartis, ladite section utile étant bordée tout autour par une section périphérique, ladite première plaque présentant une épaisseur donnée « e1 » au niveau de la section périphérique et une épaisseur « e2 » moindre au niveau de la section utile de façon à délimiter un évidement, une feuille de graphite souple étant appliquée contre ladite première plaque sur toute la surface de l'évidement, la face apparente de la feuille de graphite souple comportant un canal de distribution pour l'un des fluides, le canal étant formé en totalité dans la feuille de graphite de sorte qu'il n'y a pas de contact entre le canal et la surface de la première plaque dans la section utile S, la face extérieure 11o de la section périphérique étant recouverte d'un revêtement anti-corrosion.

L'invention s'applique bien entendu aux plaques bipolaires, c'est-à-dire aux plaques dont un côté forme l'anode d'une cellule électrochimique élémentaire d'une pile à combustible et l'autre côté forme la cathode d'une cellule électrochimique élémentaire adjacente. Mais l'invention s'applique aussi aux plaques d'extrémité. En fait, l'invention s'applique chaque fois que l'on veut réaliser une plaque de distribution comportant un réseau interne de canaux destiné à acheminer l'un des gaz consommés par une pile à combustible, ou même le fluide de refroidissement.

### BREVE DESCRIPTION DES FIGURES

La présente invention sera mieux comprise grâce à la description détaillée d'un mode de réalisation illustré avec les figures jointes dans lesquelles :
La figure 1 est un éclaté montrant différents éléments constitutifs d'une plaque de distribution selon l'invention, dans une première phase de sa fabrication ;
La figure 2 montre le résultat obtenu à la fin de la première phase de fabrication ;
La figure 3 est un éclaté montrant différents éléments constitutifs de la plaque de distribution selon l'invention, dans une deuxième phase de sa fabrication ;
La figure 4 montre le résultat obtenu à la fin de la deuxième phase de fabrication;
La figure 5 montre schématiquement la plaque de distribution selon l'invention dans une configuration dans laquelle elle comporte ses caractéristiques essentielles, configuration obtenue à la fin d'une troisième phase de fabrication ;
La figure 5A est une coupe selon le trait d'axe à la figure 5 ;
La figure 6 est un agrandissement de la zone identifiée par le cercle Z à la figure 5;
La figure 7 est un éclaté montrant les différents éléments constitutifs d'une plaque bipolaire comportant une plaque de distribution selon l'invention ;
La figure 8 est une perspective montrant la plaque bipolaire de la figure 7 telle qu'elle apparaît lorsqu'elle est assemblée.

### DESCRIPTION DU MODE DE REALISATION PREFERE DE L'INVENTION

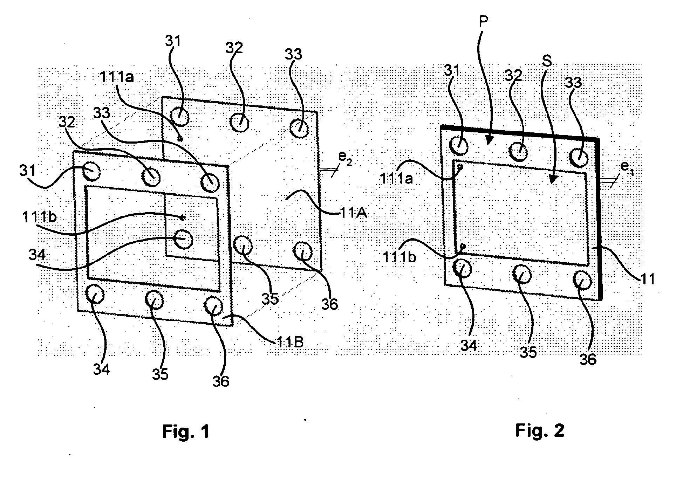

Commençons par la description d'un mode particulier de réalisation d'un évidement au centre d'une plaque de distribution, ce qui est l'une des caractéristiques remarquables apportées par la présente invention. On forme la première plaque, c'est-à-dire celle qui comporte un évidement pour recevoir la feuille de graphite souple, à partir d'une plaque de base 11A et d'un cadre 11B représentés à la figure 1. Pour la première plaque, on utilise un matériau métallique comme matériau étanche à tous les fluides utilisés dans une pile à combustible et conducteur de l'électricité de préférence de l'acier inoxydable. Cela confère aux plaques de distribution une excellente robustesse.

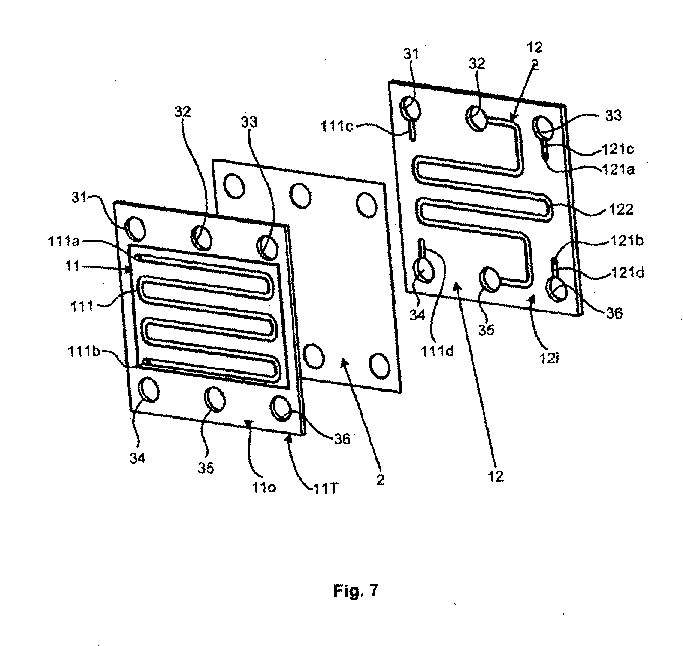

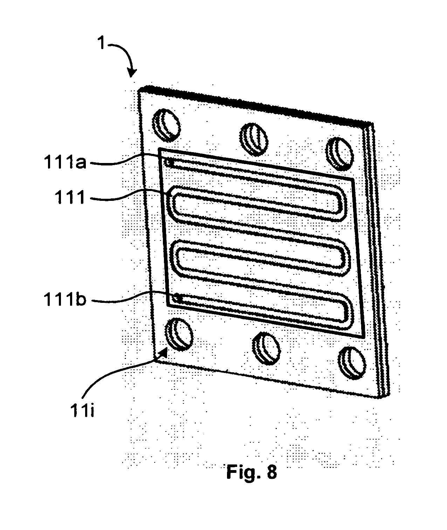

La plaque de base 11A et le cadre 11B sont découpés dans une tôle plane d'acier inoxydable d'épaisseur appropriée. Pour la plaque de base 11A, on utilise par exemple une tôle de 0.1 mm. Pour le cadre 11 B, on utilise par exemple une tôle de 0.6 mm. On va superposer et solidariser la plaque de base 11A et le cadre 11B, par exemple au moyen d'une brasure. Pour plus de détails sur la réalisation de la liaison entre la plaque de base 11A et le cadre 11 B par brasure, le lecteur est renvoyé ci-dessous à la description des figures 7 et 8 qui expliquent la réalisation d'une plaque bipolaire en solidarisant une plaque de distribution selon l'invention et une autre plaque de distribution par brasure 2. On voit aussi sur la plaque de base deux perçages 111a et 111b qui font partie d'un canal de distribution de fluide, comme cela apparaîtra plus clairement dans la suite.

Sur l'un des côtés de la plaque de base 11A et du cadre 11B, on voit une zone présentant trois ouvertures 31, 32 et 33 de section relativement importante, ainsi que sur le côté opposé une autre zone présentant également trois ouvertures 34, 35 et 36 de section relativement importante. Toutes les ouvertures 31 respectivement 32, 33, 34, 35 et 36 sont alignées avec des ouvertures identiques réalisées sur les différents éléments constitutifs de la pile à combustible pour former une nourrice pour l'acheminement des fluides : les ouvertures 31 et 34 acheminent par exemple l'hydrogène, les ouvertures 33 et 36 acheminent par exemple l'oxygène et les ouvertures 32 et 35 permettent la circulation d'un fluide de refroidissement.

Le cadre constitue la section périphérique P et l'intérieur du cadre, dont la surface correspond à la section utile S, va délimiter l'évidement 11v. L'assemblage de la plaque de base 11A et du cadre 11B est représenté à la figure 2 et constitue ce que l'on appelle la première plaque 11, qui présente une épaisseur donnée « e1 » au niveau de la section périphérique P. Cette épaisseur « e1 » correspond à la somme de l'épaisseur de la plaque de base 11A et du cadre 11B, plus l'épaisseur de la brasure qui est en fait négligeable si on la réalise par la technique décrite ci-dessous. La première plaque 11 présente une épaisseur « e2 » moindre au niveau de la section utile S (c'est l'épaisseur de la plaque de base 11A).

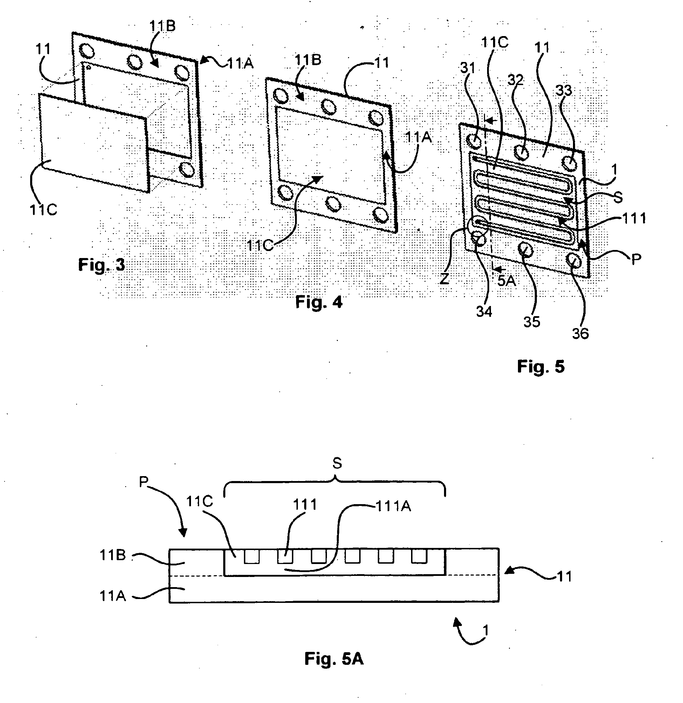

A la figure 3, on voit une feuille de graphite souple 11C que l'on va appliquer contre ladite première plaque 11, sur toute la surface de l'évidement 11 v, pour obtenir l'assemblage illustré à la figure 4. Un matériau approprié pour la feuille de graphite souple est une feuille de 0.5 mmde « Sigraflex » fabriqué par SGL Carbon AG.

Enfin, ou auparavant d'ailleurs, on imprime dans la feuille de graphite 11C un canal de distribution 111 pour l'un des fluides. Cela peut se faire par estampage. Il peut être préférable de d'abord former le canal de distribution sur la feuille de graphite puis de rapporter celle-ci dans l'évidement. Dans tous les cas, on obtient le résultat illustré à la figure 5 ; cela constitue un exemple de plaque de distribution 1 selon l'invention.

Ainsi, le fluide circulant dans le canal de distribution 111 n'est pas en contact avec la surface de la première plaque 11 dans la section utile S, comme on le voit à la figure 5A. Le canal de distribution est formé dans l'épaisseur de la feuille de graphite. Il subsiste une certaine épaisseur 111A de graphite qui isole le canal 111 de la surface de la plaque de base 11A. La feuille de graphite 11C n'est pas ou peu sensible à l'attaque chimique par les fluides susceptibles de circuler dans le canal de distribution 111. Cela ouvre un choix plus grand pour le matériau de la première plaque 11. Dans l'exemple de réalisation décrit, on peut utiliser l'acier pour la plaque de base 11A.

La face extérieure 11o de la section périphérique P, c'est-à-dire du cadre 11B dans le mode de réalisation décrit ici, est recouverte d'un revêtement anti-corrosion (voir figure 7). Il n'est pas nécessaire de prévoir un tel revêtement sur la plaque de base 11A, comme expliqué ci-dessus. De préférence, le revêtement anti-corrosion est non conducteur de l'électricité. Dans ce dernier cas, il y a grand avantage à ce que le revêtement anti-corrosion recouvre également la tranche 11T de la plaque de distribution car cela réalise une isolation électrique de toutes surfaces de la pile à combustible qui restent accessible de l'extérieur une fois la pile à combustible montée et en service.

On a constaté que si le fond de l'évidement 11v est également recouvert d'une mince couche de cuivre (ou de nickel ou d'or), qui se trouve alors interposée entre la première plaque 11 et la feuille de graphite souple 11C, la conduction électrique entre la feuille de graphite souple 11C et la première plaque 11 s'en trouve améliorée.

Notons encore que le canal de distribution 111 aboutit à l'une de ses extrémités au perçage 111 a et à l'autre de ses extrémités au perçage 111 b, perçages réalisés dans la plaque de base 11A. Pour connaître ce à quoi aboutissent les perçages 111a et 111 b, le lecteur est renvoyé ci-dessous à la description des figures 7 et 8.

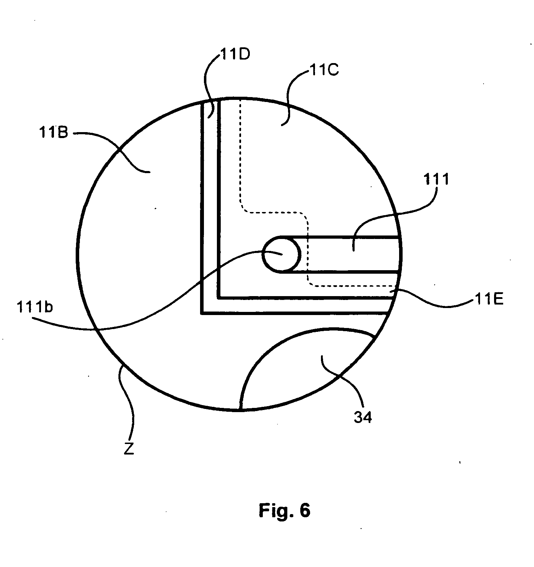

Afin de renforcer encore l'étanchéité de la pile à combustible aux gaz, de préférence, la feuille de graphite souple 11C est de section (c'est-à-dire de surface) légèrement inférieure à la section S de l'évidement et le jeu entre les bords de la feuille de graphite souple 11C et les bords de l'évidement, c'est-à-dire les bords du cadre 11B, est comblé par un matériau de comblement 11 D étanche au fluide destiné à circuler dans les canaux, comme on le voit à la figure 6. Ce matériau peut être une colle qui aide à solidariser la feuille en graphite souple 11C sur la première plaque 11. A cette fin, la colle est interposée entre la feuille de graphite souple 11C et ladite première plaque sur une surface limitée à la périphérie 11E de la feuille en graphite souple 11C. La plupart des matériaux appropriés (epoxy, silicone) sont non conducteurs de l'électricité. De façon surprenante, on a observé que l'on a avantage à ce que la colle, non conductrice de l'électricité, soit également interposée entre la feuille de graphite souple et ladite première plaque sur tout le pourtour des orifices d'entrée et de sortie 111 b du fluide lorsque la plaque de distribution selon l'invention est une plaque de distribution de gaz consommé par la pile à combustible. Cela baisse l'intensité de courant à ces endroits et augmente la durée de vie des membranes échangeuses d'ions.

Aux figures 7 et 8, on voit une plaque bipolaire 3 formée par l'assemblage d'une plaque de distribution 1 selon l'invention et d'une autre plaque de distribution 12.

La plaque de distribution 1 et la plaque de distribution 12 comportent trois ouvertures 31, 32 et 33 d'un côté et, sur le côté opposé, trois ouvertures 34, 35 et 36. Toutes les ouvertures 31 sont alignées d'une plaque 11 à l'autre 12. L'ensemble des ouvertures 31, respectivement 32, 33, 34, 35 et 36 sont alignées. L'ensemble des ouvertures 31, respectivement 33, forme une nourrice pour l'acheminement d'un des gaz : les ouvertures 31 et 33 acheminent les unes (31) l'hydrogène et les autres (33) l'oxygène. L'ensemble des ouvertures 34, respectivement 36, forme une nourrice pour le retour d'un des gaz : les ouvertures 34 et 36 assurent le retour les unes (34) de l'hydrogène non consommé par la pile et les autres (36) de l'oxygène non consommé par la pile. Par ailleurs, toutes les ouvertures 32 forment une nourrice qui achemine le fluide de refroidissement tandis que toutes les ouvertures 35 forment une nourrice qui assure le retour du fluide de refroidissement servant à réguler la pile à combustible en température.

L'une des faces 12i de la seconde plaque de distribution 12 comporte un canal interne 122, tracé pour répartir sur la totalité de la section utile de la seconde plaque 12 le fluide de refroidissement utilisé pour réguler la pile à combustible en température. L'orifice 111a est aligné avec le bout d'un tronçon de canal 111 c creusé sur la face 12i. L'orifice 111b est aligné avec le bout d'un tronçon de canal 111d creusé sur la même face 12i. Chacun de ces tronçons de canal 111c et 111d communique avec les ouvertures 31 et 34. Ceci assure la communication entre le premier canal de distribution 111 et les nourrices concernées.

Sur l'autre des faces de la seconde plaque de distribution 12 (non représentée), est arrangé un deuxième canal de distribution semblable au canal de distribution 111 et lui aussi tracé pour répartir sur la totalité de la section utile de la seconde plaque de distribution 12 l'autre des deux gaz utilisés par la pile à combustible. Les ouvertures 33 et 36 de la seconde plaque 12 sont en communication avec, respectivement, un tronçon de canal 121 c et avec un tronçon de canal 121 d creusés tous deux sur la face 12i. Chacun des tronçons de canal 121c et 121d se termine par un orifice 121a, respectivement 121 b, traversant l'épaisseur de la seconde plaque 12, pour mettre en communication le deuxième canal d'acheminent de gaz avec les nourrices concernées.

Le mode d'assemblage selon l'invention est le suivant. Entre la plaque de distribution 1 et la seconde plaque de distribution 12, on interpose une feuille (ou une pâte) de brasure 2. Une solution avantageuse est l'utilisation d'acier inoxydable pour les plaques de distribution comme déjà dit et de cuivre (pur ou allié) pour la feuille de brasure 2. Après mise en contact des plaques de distribution 1 et 12 avec la feuille de brasure 2, on chauffe cet ensemble jusqu'à la température de fusion du métal de brasure et on obtient, après refroidissement, une plaque bipolaire 3 comportant sur une face des canaux 111, par exemple du circuit de gaz anode, sur l'autre face des canaux du circuit de gaz cathode, et entre les plaques des canaux 122, non visibles après assemblage, du circuit de fluide de refroidissement. Comme suggéré ci-dessus, on peut donc utiliser avantageusement la même technique de brasure pour assembler la plaque de base 11A et le cadre 11 B pour former ladite première plaque 11.

Une plaque bipolaire selon l'invention est destinée à être associée à des éléments formant une cellule électrochimique. On sait qu'une cellule électrochimique élémentaire 9 est à l'heure actuelle (sans que ceci ne limite en aucune façon l'invention) habituellement constituée de la superposition de cinq couches : une membrane polymère échangeuse d'ions, deux électrodes comportant des éléments chimiques nécessaires au déroulement de la réaction électrochimique, comme par exemple du platine, et deux couches de diffusion des gaz permettant d'assurer une diffusion homogène des gaz acheminés par les réseaux de canaux des plaques bipolaires sur la totalité de la surface de la membrane échangeuse d'ions.

Ainsi, grâce à l'invention, on peut choisir comme matériau constitutif de base de chacune des plaques de distribution un matériau conducteur de l'électricité et présentant des caractéristiques mécaniques suffisantes pour permettre non seulement la transmission des sollicitations de service pour la pile à combustible, mais également pour permettre l'automatisation de la fabrication des plaques de distribution. En effet, une telle automatisation suppose des manipulations par des robots de fabrication et si ces manipulations requièrent peu de précautions grâce à la solidité du matériau constitutif des plaques de base, la réalisation de la fabrication automatique n'en sera que plus simple, plus robuste et plus économique.

## Revendications

1. Plaque de distribution (1) de fluide pour une pile à combustible, ayant une face intérieure (11i) et ayant une face extérieure (11o) destinée à coopérer avec une membrane échangeuse d'ions, comportant une première plaque (11 ) en matériau métallique étanche à tous les fluides utilisés dans une pile à combustible et conducteur de l'électricité, ladite plaque de distribution présentant une section utile (S) qui est la surface sur laquelle les gaz utilisés par la réaction électrochimique sont répartis, ladite section utile (S) étant bondée tout autour par une section périphérique (P), ladite première plaque présentant une épaisseur donnée « e1 » au niveau de la section périphérique et une épaisseur « e2 » moindre au niveau de la section utile de façon à délimiter un évidement (11v), une feuille de graphite souple (11 C) étant appliquée contre ladite première plaque (11) sur toute la surface de l'évidement, la feuille en graphite souple étant apparente du côté de la face extérieure (11o), la face apparente de la feuille de graphite souple comportant un canal de distribution (111) pour l'un des fluides, le canal étant formé en totalité dans la feuille de graphite, de sorte qu'il n'y a pas de contact entre le canal et la surface de première plaque dans la section utile S, la face extérieure (11o) de la section périphérique (P) étant recouverte d'un revêtement anti-corrosion.

2. Plaque de distribution selon la revendication 1, ayant une face intérieure (11 i) et ayant une face extérieure (11o) destinée à coopérer avec une membrane échangeuse d'ions, la feuille en graphite souple étant apparente du côté de la face extérieure (11o), le canal étant un canal (111) de distribution pour un premier gaz consommé par la pile.

3. Plaque de distribution selon la revendication 1 dans laquelle la première plaque est en acier inoxydable.

4. Plaque de distribution selon la revendication 1 dans laquelle le revêtement anti-corrosion est non conducteur de l'électricité.

5. Plaque de distribution selon l'une des revendications 4, dans laquelle le revêtement anti-corrosion recouvre également la tranche (11T) de la plaque de distribution.

6. Plaque de distribution selon l'une des revendications 1 à 5, dans laquelle la feuille de graphite souple (11 C) est de section légèrement inférieure à la section (S) de l'évidement, le jeu entre les bords de la feuille de graphite souple (11C) et les bords de la section périphérique (P) étant comblé par un matériau de comblement (11D) étanche au fluide destiné à circuler dans les canaux.

7. Plaque de distribution selon la revendication 6 dans laquelle le matériau de comblement (11D) est une colle non conductrice de l'électricité, également interposée entre la feuille de graphite souple et ladite première plaque sur une surface limitée à la périphérie (11E) de la feuille en graphite souple (11C), y compris sur tout le pourtour des orifices d'entrée et de sortie du fluide.

8. Plaque de distribution selon la revendication 4 dans laquelle le fond de l'évidement est recouvert d'une mince couche de cuivre interposée entre la première plaque et la feuille de graphite souple.

9. Plaque de distribution selon l'une des revendications 1 à 8 comportant une seconde plaque de distribution (12) en matériau conducteur de l'électricité ayant une face extérieure (12o) et ayant une face intérieure (12i) destinée à être appliquée contre la face intérieure (11 i) de la première plaque (1), un canal (122) pour la circulation d'un fluide de refroidissement étant aménagé sur la face intérieure (12i) de la seconde plaque (12), les plaques étant réunies par une couche uniforme d'un matériau de liaison conducteur de l'électricité (2) recouvrant toute la face interne de chacune des première et seconde plaques pour former une plaque bipolaire (3).

## Claims

1. Fluid distribution plate (1) for a fuel cell assembly, comprising a first plate (11) made of a metallic electrically conductive material impermeable to all the fluids used in a fuel cell assembly, said distribution plate having a useful section (S) which is the surface over which the gases used by the electrochemical reaction are distributed, said useful section (S) being bordered all around by a peripheral section (P), said first plate having a given thickness e₁ in the peripheral section and a smaller thickness e₂ in the useful section so as to define a recess (11v), a flexible graphite foil (11C) being applied against said first plate (11) over the entire surface of the recess, the visible face of the flexible graphite foil having a distribution channel (111) for one of the fluids, the channel being formed completely in the graphite foil, so that there is no contact between the channel and the surface of the first plate in the useful section S, the outer face (11o) of the peripheral section (P) being covered with an anti-corrosion coating.

2. Distribution plate according to Claim 1, having an inner face (11i) and an outer face (11o) which is intended to cooperate with an ion-exchange membrane, the flexible graphite foil being visible from the side facing the outer face (11o), the channel being a distribution channel (111) for a first gas consumed by the cell.

3. Distribution plate according to Claim 1, in which the first plate is made of stainless steel.

4. Distribution plate according to Claim 1, in which the anti-corrosion coating is electrically non-conductive.

5. Distribution plate according to Claim 4, in which the anti-corrosion coating also covers the edge (11T) of the distribution plate.

6. Distribution plate according to either one of Claims 1 to 5, in which the flexible graphite foil (11C) has a cross section that is slightly smaller than the section (S) of the recess, the gap between the edges of the flexible graphite foil (11C) and the edges of the peripheral section (P) being filled with a filling material (11D) impermeable to the fluid intended to flow in the channels.

7. Distribution plate according to Claim 6, in which the filling material (11D) is an electrically non-conductive adhesive, which is also interposed between the flexible graphite foil and said first plate on a surface limited to the periphery (11E) of the flexible graphite foil (11C), including over the entire perimeter of the fluid inlet and outlet orifices.

8. Distribution plate according to Claim 4, in which the bottom of the recess is covered with a thin layer of copper interposed between the first plate and the flexible graphite foil.

9. Distribution plate according to one of Claims 1 to 8, which includes a second distribution plate (12) made of an electrically conductive material, having an outer face (12o) and an inner face (12i) which is intended to be applied against the inner face (11i) of the first plate (1), a channel (122) for the circulation of a coolant being provided on the inner face (12i) of the second plate (12), the plates being joined together via a uniform layer of an electrically conductive connecting material (2) covering the entire internal face of each of the first and second plates in order to form a bipolar plate (3).

## Patentansprüche

1. Fluidverteilungsplatte (1) für eine Brennstoffzelle, die eine innere Fläche (11i) besitzt und eine äußere Fläche (11o), die dazu bestimmt ist, mit einer Ionenaustauschmembran zusammenzuwirken, besitzt, die eine erste Platte (11) aus einem Metallwerkstoff aufweist, die für sämtliche in einer Brennstoffzelle verwendete Fluide dicht ist und ein elektrischer Leiter ist, wobei die Verteilungsplatte einen Nutzquerschnitt (S) aufweist, der die Oberfläche ist, auf der die durch die elektrochemische Reaktion verwendeten Gase verteilt werden, wobei der Nutzquerschnitt (S) auf seinem gesamten Umfang durch einen Umfangsabschnitt (P) begrenzt ist, wobei die erste Platte auf Höhe des Umfangsabschnitts eine gegebene Dicke "e1" und auf Höhe des Nutzabschnitts eine kleinere Dicke "e2" aufweist, so dass eine Aussparung (11v) begrenzt wird, wobei auf die erste Platte (11) auf der gesamten Oberfläche der Aussparung eine nachgiebige Graphitfolie (11C) aufgebracht ist, wobei die nachgiebige Graphitfolie von Seiten der äußeren Fläche (11o) sichtbar ist, wobei die sichtbare Fläche der nachgiebigen Graphitfolie einen Verteilungskanal (111) für eines der Fluide aufweist, wobei der Kanal als Ganzes in der Graphitfolie ausgebildet ist, derart, dass zwischen dem Kanal und der Oberfläche der ersten Platte im Nutzquerschnitt S kein Kontakt vorhanden ist, wobei die äußere Fläche (11o) des Umfangsquerschnitts (P) von einer Korrosionsverhinderungsbeschichtung abgedeckt ist.

2. Verteilungsplatte nach Anspruch 1, die eine innere Fläche (11i) besitzt und eine äußere Fläche (11o), die dazu bestimmt ist, mit einer Ionenaustauschmembran zusammenzuwirken, besitzt, wobei die nachgiebige Graphitfolie von Seiten der äußeren Fläche (11o) sichtbar ist und wobei der Kanal ein Verteilungskanal (111) für ein von der Zelle verbrauchtes erstes Gas ist.

3. Verteilungsplatte nach Anspruch 1, wobei die erste Platte aus Edelstahl besteht.

4. Verteilungsplatte nach Anspruch 1, wobei die Korrosionsverhinderungsbeschichtung kein elektrischer Leiter ist.

5. Verteilungsplatte nach Anspruch 4, wobei die Korrosionsverhinderungsbeschichtung auch die Schnittfläche (11T) der Verteilungsplatte abdeckt.

6. Verteilungsplatte nach einem der Ansprüche 1 bis 5, wobei die nachgiebige Graphitfolie (11C) einen Querschnitt besitzt, der etwas kleiner als der Querschnitt (S) der Aussparung ist, wobei das Spiel zwischen den Rändern der nachgiebigen Graphitfolie (11C) und den Rändern des Umfangsabschnitts (P) durch ein Füllmaterial (11D) gefüllt ist, das gegenüber dem Fluid, das in den Kanälen zirkulieren soll, dicht ist.

7. Verteilungsplatte nach Anspruch 6, wobei das Füllmaterial (11D) ein elektrisch nicht leitender Klebstoff ist, der auch zwischen die nachgiebige Graphitfolie und die erste Platte auf einer begrenzten Oberfläche am Umfang (11E) der nachgiebigen Graphitfolie (11C) einschließlich des gesamten Umfangs von Fluideinlass- und Fluidauslassöffnungen eingefügt ist.

8. Verteilungsplatte nach Anspruch 4, wobei der Boden der Aussparung durch eine dünne Kupferschicht abgedeckt ist, die zwischen die erste Platte und die nachgiebige Graphitfolie eingefügt ist.

9. Verteilungsplatte nach einem der Ansprüche 1 bis 8, die eine zweite Verteilungsplatte (12) aus einem elektrisch leitenden Material enthält, die eine äußere Fläche (12o) besitzt und eine innere Fläche (12i), die dazu bestimmt ist, gegen die innere Fläche (11i) der ersten Platte (1) gedrückt zu werden, besitzt, wobei ein Kanal (122) für die Zirkulation eines Kühlungsfluids auf der inneren Fläche (12i) der zweiten Platte (12) ausgespart ist, wobei die Platten durch eine gleichmäßige Schicht eines elektrisch leitenden Verbindungsmaterials (2) vereinigt sind, das die gesamte innere Fläche sowohl der ersten als auch der zweiten Platte abdeckt, um eine Bipolarplatte (3) zu bilden.
